# FASCICULE DE BREVET EUROPEEN

(11) **EP 0 574 721 B1**
(45) Date de publication et mention de la délivrance du brevet: **26.03.1997**
(21) Numéro de dépôt: 93108157.4
(22) Date de dépôt: 19.05.1993
(51) Int. Cl.: A23L 1/09, A23L 1/0522

(54) **Procédé de préparation d'un produit amylacé cireux stable et produit obtenu**
Verfahren zur Herstellung eines Wachsstärkeproduktes und gewonnenes Produkt
Process for preparing a stable waxy starch product and the product obtained

(30) Priorité: 16.06.1992 CH 1896/92
(43) Date de publication de la demande: 22.12.1993
(73) Titulaire: SOCIETE DES PRODUITS NESTLE S.A., 1800 Vevey (CH)
(72) Inventeur: Gumy, Didier, CH-1630 Bulle (CH); Wursch, Pierre, CH-1814 La Tour-de-Peilz (CH)
(74) Mandataire: Wavre, Claude-Alain

(56) Documents cités:
- EP-A- 0 231 729
- EP-A- 0 258 486
- EP-A- 0 332 027
- JOURNAL OF FOOD SCIENCE vol. 38, no. 3, 1973, CHICAGO US pages 484 - 485 L. DAHLE ET AL. "Some effects of beta amylolytic degradation of pastes of waxy maize starch"
- PATENT ABSTRACTS OF JAPAN vol. 13, no. 417 (C-636)14 Septembre 1989
- DATABASE WPI Section Ch, Week 7635, Derwent Publications Ltd., London, GB; Class D13, AN 76-65568X (35)
- DATABASE WPI Section Ch, Week 7638, Derwent Publications Ltd., London, GB; Class D13, AN 76-71185X (38)

## Description

La présente invention a trait à un produit amylacé stable nouveau et à son procédé de préparation.

Tous les amidons, à l'exception des amidons cireux, contiennent deux polymères de glucose, l'amylose et l'amylopectine.
Lorsque l'on traite thermiquement une suspension d'amidon non cireux, la granule d'amidon gonfle de manière irréversible et l'amylose est solubilisée préférentiellement. Lors du refroidissement de la suspension, les polysaccharides amylacés rétrogradent, de manière rapide pour l'amylose , de l'ordre de quelques heures, et de manière plus lente pour l'amylopectine, de l'ordre de quelques jours. Cette rétrogradation affecte particulièrement la texture des aliments contenant ces amidons et les rend peu acceptables.

Il est donc préférable d'utiliser un produit amylacé riche en amylopectine, tel qu'un amidon de maïs cireux. Toutefois la stabilité des gels et liants obtenus à partir de produits amylacés riches en amylopectine n'est pas suffisante pour les besoins de l'industrie alimentaire où il est parfois nécessaire d'avoir une durée de conservation de plusieurs mois.

Il est connu d'améliorer, entre autre, la stabilité au stockage des gels ainsi obtenus, par exemple en traitant le produit amylacé que l'on souhaite employer, de manière à modifier chimiquement la molécule d'amylopectine.
Par exemple, on peut substituer quelques unités de glucose par des molécules organiques hydrophiles ou hydrophobes, ou par un anion minéral, ce qui permet de stabiliser la molécule d'amylopectine et de diminuer le risque de rétrogradation.

Il est aussi possible de former des ponts diesters organiques ou minéraux, ou des diethers, entre deux unités de glucose appartenant à deux chaînes différentes. Cette réticulation permet de diminuer le gonflement de la granule d'amidon lors du traitement thermique, et permet ainsi de modifier les caractéristiques rhéologiques de la molécule d'amylopectine en la rendant plus résistante aux traitements mécaniques (cisaillement) et au milieu acide. Ces modifications chimiques confèrent aux gels d'amylopectine obtenus diverses propriétés physiques recherchées, telles qu'un bon pouvoir gélifiant et une bonne stabilité en milieu neutre et/ou acide, par exemple lors de traitements de type cuisson, stérilisation ou surgélation.
Les produits amylacés stables ainsi obtenus présentent toutefois l'inconvénient d'avoir été traités chimiquement, ce qui peut être mal perçu par les consommateurs.

Journal of Food Science **38** No 3, 484-485 (1973), étudie l'effet d'une hydrolyse à différents degrés de l'amylopectine de maïs cireux avec une β-amylase et montre qu'une telle hydrolyse entraîne une baisse notable de la viscosité d'un gel d'amylopectine ainsi traitée.

Database WPI, Section Ch, Week 7635, Derwent Publications Ltd., London (GB); Class D13, AN=76-65568X, décrit une hydrolyse d'une solution d'amidon gélatinisée avec une β-amylase produisant un mélange de maltose et de dextrines β-limites, et une précipitation à l'alcool pour obtenir des dextrines β-limites purifiées présentant la même viscosité et la même stabilité que le glycogène.

La présente invention a pour but de pallier l'inconvénient ci-dessus en proposant un procédé de préparation d'un produit amylacé stable en n'utilisant pas de traitement chimique proprement dit, mais en effectuant une réaction d'hydrolyse contrôlée.

La présente invention a donc pour objet un procédé de préparation d'un produit amylacé cireux natif stable, dans lequel on prépare une suspension aqueuse à 5-30% en poids d'un produit amylacé cireux natif comprenant au moins 95% en poids d'amylopectine par rapport au poids d'amidon sec total, on gélatinise ce produit amylacé en traitant thermiquement la suspension aqueuse à 65-75°C, puis on hydrolyse le produit gélatinisé avec une β-amylase pure de manière à obtenir un degré d'hydrolyse compris entre 5% et 20%.

La présente invention a également pour objet un produit amylacé cireux natif stable susceptible d'être ainsi obtenu.

Un avantage de l'invention est de proposer un procédé simple et aisément industrialisable, permettant l'obtention d'un produit stable sous forme de gel.
Par produit stable, on entend principalement stable lors de son stockage, présentant une absence de synérèse et de modification de viscosité dans le temps, et également stable au gel/dégel.
Un autre avantage de l'invention est de permettre l'obtention d'un produit fini, utilisable par exemple comme liant instantané dans des produits réfrigérés ou surgelés.

Par produit amylacé cireux, on entend une farine ou un amidon d'un ou d'un mélange de produits amylacés tels que des céréales, particulièrement riches en amylopectine, c'est-à-dire en comprenant au moins 95% en poids par rapport au poids d'amidon sec total.
On peut citer, par exemple, comme produits amylacés cireux correspondants particulièrement à l'invention, l'amidon ou la farine de maïs cireux, l'amidon ou la farine de riz cireux et l'amidon ou la farine d'orge cireux.
Par produit amylacé natif, on entend un produit non modifié chimiquement.

Dans une première étape du procédé selon l'invention, on gélatinise le produit amylacé.
La gélatinisation est effectuée par traitement thermique à 65-75°C, notamment durant environ 8-12 minutes, d'une suspension aqueuse contenant ledit produit amylacé à raison de 5-30% en poids. Lors de cette étape, les granules d'amidon gonflent, de manière à permettre une hydrolyse enzymatique ultérieure.
Le produit amylacé gélatinisé est alors hydrolysé enzymatiquement avec une β-amylase pure, d'origine végétale ou bactérienne. Pour ce faire, on peut ajouter la β-amylase sous forme de solution aqueuse, à raison de 500-6000 U par kg d'amidon de départ.
L'unité U est définie de la manière suivante : 1 U correspond à un mg de maltose libéré en 3 minutes, à 20°C et à pH 4,8.

On effectue de préférence l'hydrolyse à une température de 65-75°C, à un pH de 5,6 et pendant environ 5 à 60 minutes , de manière à obtenir un degré d'hydrolyse d'au moins 5%, déterminé par dosage chimique des sucres réducteurs (maltose formé).

Il est aussi possible d'effectuer ladite réaction en continu, par exemple en chauffant la suspension aqueuse à une température de 50-60°C à pH 5,6, puis en lui ajoutant l'enzyme et en continuant le traitement thermique jusqu'à une température de 65-75°C, et en maintenant cette température pendant environ 5-60 minutes, de manière à obtenir un degré d'hydrolyse d'au moins 5%.

On a en effet constaté que, de manière étonnante, un degré d'hydrolyse de 5% était déjà suffisant pour permettre l'obtention d'un produit final stable.
On choisit d'obtenir un degré d'hydrolyse de l'ordre de 7-20%, sachant qu'il est possible d'aller au moins jusqu'à 55%, mais avec, en conséquence, une perte plus importante de produit final, donc une diminution du rendement.

Il est nécessaire d'effectuer l'hydrolyse avec une β-amylase pure. En effet, la présence d'α-amylase lors de l'hydrolyse entraînerait une diminution indésirable de la viscosité de l'empois d'amidon obtenu.

De plus, on a constaté que l'hydrolyse avec une β-amylase permettait de réduire la taille des molécules d'amylopectine tout en laissant intact leur structure branchée, ce qui permettait une augmentation de la viscosité des gels obtenus ensuite, pour une concentration pondérale constante d'amylopectine.

Une fois le degré d'hydrolyse souhaité atteint, on peut inactiver l'enzyme, par exemple par traitement thermique à une température de 80-85°C, durant environ 8-12 minutes, par exemple par injection de vapeur dans le double manteau du réacteur.
Lors de cette étape, on peut observer le gonflement final de la granule d'amidon, ainsi que le développement total de la viscosité du produit final.

Le produit ainsi obtenu peut alors être séché, par exemple par passage sur des rouleaux rotatifs tournant à 1-3 tours/min et à une température de 130-160°C, de manière à obtenir un produit amylacé précuit présentant un taux de matière sèche d'environ 95-98% en poids.
L'étape de séchage peut également être effectuée par atomisation.

Il est également possible d'utiliser directement le produit hydrolysé tel quel, c'est-à-dire se présentant sous forme humide, sans avoir besoin de lui faire subir une étape de séchage.

On obtient ainsi un produit amylacé cireux natif, ayant été hydrolysé à au moins 5% avec une β-amylase pure, et stable, pouvant supporter plusieurs cycles de gel-dégel en conservant sa stabilité et sans modification de sa viscosité. Ce produit amylacé est reconstituable à froid et peut être utilisé dans des sauces stérilisées ou surgelées, ou dans des desserts stérilisés de type laitage, par exemple.

La présente invention est illustrée plus en détail dans les exemples suivants, dans lesquels les parties et pourcentage sont donnés en poids.

### Exemple 1

On prépare une suspension aqueuse comprenant 40 kg d'amidon de maïs cireux et 335 litres d'eau, que l'on chauffe à 70°C pendant environ 10 minutes de manière à gélatiniser l'amidon. On ajuste le pH à 5,6 à l'aide d'acide acétique concentré. La température est ramenée à 55°C. On ajoute ensuite 10 g de β-amylase pure de soja (activité 4040 U/g), diluée dans 20 litres d'eau, et on laisse l'hydrolyse s'effectuer pendant environ 60 minutes, de manière à obtenir un degré d'hydrolyse de 13% environ.

Lorsque le degré d'hydrolyse est atteint, on inactive l'enzyme par traitement thermique à 80°C, puis on sèche le produit obtenu sur des rouleaux rotatifs tournant à 8 tours/min, à 180°C.
On obtient ainsi un produit final présentant un taux de matière sèche de 97,5% et se présentant sous forme de paillettes.

On peut préparer un empois d'amidon à partir du produit ainsi obtenu, par mélange de 50 g dudit produit en poudre dans 950 ml d'eau à 25°C.
On obtient un gel présentant une texture gluante, comparable à celle d'un gel de maïs cireux frais.

La mesure de la viscosité du gel ainsi obtenu, à 25°C, donne les résultats suivants (mesures effectuées à l'aide d'un appareil Carrimed) :
- sans cisaillement : 167 mPas
- après chauffage(70°C), sans cisaillement : 130 mPas
- après homogénéisation(Polytron) : 95 mPas
- après chauffage(70°C) et homogénéisation : 82 mPas

### Exemple 2

Le présent exemple a pour objet de déterminer l'influence du degré d'hydrolyse sur la stabilité du gel obtenu, et l'enthalpie de rétrogradation de l'amylopectine.
On gélatinise, hydrolyse et sèche un amidon de maïs cireux de la manière décrite à l'exemple 1, en faisant varier le degré d'hydrolyse.

On prépare ensuite un empois d'amidon par préparation d'un mélange comprenant 20 g de produit amylacé obtenu dans 980ml d'eau.
On fait ensuite subir à l'empois ainsi préparé 1, 3 ou 5 cycles de gel-dégel (un cycle étant constitué d'une congélation à -40°C d'au moins 20 minutes, suivi d'une décongélation à température ambiante), et l'on détermine le volume d'eau exsudée après centrifugation de l'empois dégelé.

On obtient les résultats suivants, en % d'eau exsudée :

| Degré d'hydrolyse | Nombre de cycles | | | |
|---|---|---|---|---|
| | 0 | 1 | 3 | 5 |
| 0% | 0 | 4 | 18 | 27 |
| 4,8% | 0 | 0 | 0 | 0 |
| 5,8% | 0 | 0 | 0 | 0 |
| 8,1% | 0 | 0 | 0 | 0 |
| 9,2% | 0 | 0 | 0 | 0 |
| 12,6% | 0 | 0 | 0 | 0 |

On voit donc que l'étape d'hydrolyse permet de stabiliser le produit puisque celui-ci n'exsude plus d'eau s'il a été hydrolysé, même faiblement.

On prépare ensuite un empois d'amidon en mélangeant 400 g de produit amylacé dans 600 ml d'eau.
On mesure l'enthalpie de rétrogradation de l'amylopectine après 18 jours de stockage à 20°C, à l'aide d'un appareil de calorimétrie différentielle Mettler DSC 30.

On obtient les résultats suivants :

| | | | | | | |
|---|---|---|---|---|---|---|
| Degré d'hydrolyse (%) | 0 | 4,8 | 5,8 | 8,1 | 9,2 | 12,6 |
| Enthalpie (J/g) | 9,6 | 7,0 | 4,5 | 2,9 | 2,0 | 0,8 |

On constate donc que l'étape d'hydrolyse permet de diminuer la vitesse de rétrogradation du produit, ce qui est illustré par la diminution de l'enthalpie en fonction de l'augmentation du degré d'hydrolyse.

### Exemple 3

Le présent exemple a pour objet de déterminer l'influence du degré d'hydrolyse sur la stabilité du gel obtenu, et l'enthalpie de rétrogradation de l'amylopectine.
On gélatinise, hydrolyse et sèche un amidon de maïs cireux de la manière décrite à l'exemple 1, en faisant varier le degré d'hydrolyse.

On prépare ensuite un empois d'amidon par préparation d'un mélange comprenant 400 g de produit amylacé obtenu dans 600ml d'eau.
On fait ensuite subir à l'empois ainsi préparé 1, 3 ou 5 cycles de gel-dégel (un cycle étant constitué d'une congélation à -40°C, suivi d'une décongélation à température ambiante), et l'on mesure l'enthalpie de rétrogradation de l'amylopectine, dans les mêmes conditions qu'à l'exemple 2.

On obtient les résultats suivants, en J/g :

| Degré d'hydrolyse | Nombre de cycles | | | |
|---|---|---|---|---|
| | 0 | 1 | 3 | 5 |
| 0% | 0 | 0 | 2,4 | 3,1 |
| 1,8% | 0 | 0 | 0,3 | 1,0 |
| 7,9% | 0 | 0 | 0,3 | 0,6 |
| 15,8% | 0 | 0 | 0,4 | 0,8 |
| 36,1% | 0 | 0 | 0,6 | 0,7 |

On voit donc que l'étape d'hydrolyse permet de stabiliser le produit puisque l'enthalpie de rétrogradation devient très faible, même après plusieurs cycles de gel/dégel.

### Exemple 4

On prépare une suspension aqueuse comprenant 290 g de farine de riz cireux et 1650 ml d'eau, que l'on chauffe à 70°C pendant environ 10 minutes, de manière à gélatiniser l'amidon. On ajuste le pH à 5,6 par addition d'acide acétique concentré. La température est ramenée à 55°C.

On ajoute ensuite 0,05 g de β-amylase pure de soja (activité 4040 U/g enzyme) et on laisse l'hydrolyse s'effectuer pendant environ 60 minutes, de manière à obtenir un degré d'hydrolyse de 10%.
Lorsque le degré d'hydrolyse est atteint, on inactive l'enzyme par chauffage à 80°C, et on sèche l'empois obtenu. On obtient ainsi un produit final présentant un taux de matière sèche de 92% et se présentant sous forme de poudre.

On peut préparer un empois d'amidon par mélange de 20 g de produit ainsi obtenu avec 980 ml d'eau.
On soumet alors l'empois ainsi préparé à 1, 3 ou 5 cycles de gel-dégel et l'on détermine le volume d'eau exsudée après centrifugation de l'empois dégelé.

On obtient les résultats suivants, en % d'eau exsudée :

| Degré d'hydrolyse | Nombre de cycles | | | |
|---|---|---|---|---|
| | 0 | 1 | 3 | 5 |
| 0% | 61 | 58 | 56 | 49 |
| 9,8% | 0 | 0 | 0 | 0 |

Il est donc également possible de préparer un produit selon l'invention à partir d'un riz cireux.

### Exemple 5

Le présent exemple illustre l'application en continu du procédé selon l'invention.

On prépare une suspension aqueuse comprenant 50 kg d'amidon de maïs cireux, 230 litres d'eau et 24,5 g de β-amylase de soja pure.
Le mélange est chauffé à 70°C, par injection de vapeur.
On laisse l'hydrolyse s'effectuer à 70°C pendant environ 60 minutes, de manière à obtenir un degré d'hydrolyse de 7%.
Lorsque ce degré est atteint, on inactive l'enzyme par chauffage à 80°C.
On obtient ainsi un produit présentant un taux de matière sèche de 18% que l'on peut utiliser immédiatement.
Il est également possible de sècher le produit obtenu sur des rouleaux rotatifs tournant à 8 tours/minute, à 180°C, de manière à obtenir un produit final présentant un taux de matière sèche de 95%, et se présentant sous forme de paillettes.

### Exemple 6

Le présent exemple illustre l'utilisation dans une recette plus complète du produit selon l'invention.

On prépare une sauce à la tomate contenant du concentré de tomate, de la crème à 35% de matière grasse, des épices, du sel et le produit amylacé selon l'invention à raison de 5% environ, ledit produit amylacé ayant été préparé à partir d'amidon de maïs, hydrolysé selon l'invention et présentant un degré d'hydrolyse de 8,1%.

On prépare comme témoin une sauce contenant un produit amylacé à base d'amidon de maïs n'ayant pas été hydrolysé.
La sauce ainsi préparée est cuite 10 minutes, puis mise en sachet, congelée et gardée une semaine au congélateur à -18°C.
Après cette période, la sauce est réchauffée au bain-marie à environ 60°C.

On obtient les résultats suivants :
sauce selon l'invention :
. stable au gel/dégel (pas d'eau exsudée)
. sauce à l'aspect lisse et crémeux
sauce témoin :
. instable au gel/dégel (exsudation d'eau)
. sauce avec des grumeaux

On constate donc que la sauce préparée avec le produit amylacé selon l'invention est stable, par opposition à la sauce témoin.

## Revendications

1. Procédé de préparation d'un produit amylacé cireux natif stable, dans lequel on prépare une suspension aqueuse à 5-30% en poids d'un produit amylacé cireux natif comprenant au moins 95% en poids d'amylopectine par rapport au poids d'amidon sec total, on gélatinise ce produit amylacé en traitant thermiquement la suspension aqueuse à 65-75°C, puis on hydrolyse le produit gélatinisé avec une β-amylase pure de manière à obtenir a degré d'hydrolyse compris entre 5% et 20%.

2. Procédé selon la revendication 1, dans lequel on hydrolyse le produit gélatinisé avec une β-amylase pure d'origine végétale ou bactérienne.

3. Procédé selon la revendication 1, dans lequel, après l'hydrolyse, on inactive l'enzyme par traitement thermique à 80-85°C.

4. Procédé selon la revendication 1, dans lequel on sèche le produit hydrolysé jusqu'à ce qu'il présente un taux de matière sèche de 95-98% en poids.

5. Produit amylacé cireux natif stable susceptible d'être obtenu par le procédé selon l'une ou plusieurs des revendications 1-4.

## Claims

1. Process for preparing a stable native waxy amylaceous product, in which an aqueous suspension is prepared containing 5-30 % by weight of a native waxy amylaceous product comprising at least 95 % by weight of amylopectin based on the total weight of dry starch, this amylaceous product is gelatinized by heat treating the aqueous suspension at 65-75°C, and the gelatinized product is then hydrolysed with a pure β-amylase so as to obtain a degree of hydrolysis of between 5 % and 20 %.

2. Process according to claim 1 in which the gelatinized product is hydrolysed with pure β-amylase of vegetable or bacterial origin.

3. Process according to claim 1, in which, following hydrolysis, the enzyme is inactivated by heat treatment at 80-85°C.

4. Process according to claim 1, in which the hydrolysed product is dried until it has a dry matter content of 95-98 % by weight.

5. Stable native waxy amylaceous product capable of being obtained by a process according to one or more of the claims 1-4.

## Patentansprüche

1. Verfahren zur Herstellung eines stabilen nativen Wachsstärkeproduktes, in welchem man eine wäßrige Suspension mit einem Gehalt an 5-30 Gew.-% an einem nativen Wachsstärkeprodukt, das wenigstens 95 Gew.-% Amylopektin, bezogen auf das Gesamttrockengewicht der Stärke, enthält, bereitet, dieses Stärkeprodukt durch thermisches Behandeln der wäßrigen Suspension bei 65-75°C gelatiniert und hierauf das gelatinierte Produkt mit einer reinen β-Amylase so hydrolysiert, daß ein Hydrolysegrad zwischen 5 % und 20 % erhalten wird.

2. Verfahren nach Anspruch 1, worin man das gelatinierte Produkt mit einer reinen β-Amylase pflanzlichen oder bakteriellen Ursprungs hydrolysiert.

3. Verfahren nach Anspruch 1, worin man nach der Hydrolyse das Enzym durch thermische Behandlung bei 80 bis 85°C inaktiviert.

4. Verfahren nach Anspruch 1, worin man das hydrolysierte Produkt trocknet, bis es einen Trockenmaterialgehalt von 95-98 Gew.-% aufweist.

5. Stabiles natives Wachsstärkeprodukt, erhältlich nach dem Verfahren nach einem oder mehreren der Ansprüche 1-4.
